(19) **Europäisches Patentamt / European Patent Office / Office européen des brevets**

(11) **EP 4 282 916 B1**

(12) **EUROPEAN PATENT SPECIFICATION**

(45) Date of publication and mention of the grant of the patent:
**05.11.2025 Bulletin 2025/45**

(21) Application number: **22742574.1**

(22) Date of filing: **18.01.2022**

(51) International Patent Classification (IPC):
***C08L 25/06*** (2006.01)   ***C08L 51/04*** (2006.01)
***C08L 55/02*** (2006.01)   *C08J 11/04* (2006.01)

(52) Cooperative Patent Classification (CPC):
(C-Sets available)
**C08L 25/06; C08L 51/04; C08L 55/02;** C08L 25/12;
C08L 2205/025; C08L 2205/03; C08L 2207/20;
Y02W 30/62                                             (Cont.)

(86) International application number:
**PCT/JP2022/001625**

(87) International publication number:
**WO 2022/158452 (28.07.2022 Gazette 2022/30)**

(54) **REGENERATED-STYRENE-BASED RESIN COMPOSITION AND MOLDED OBJECT**

HARZZUSAMMENSETZUNG AUF BASIS VON REGENERIERTEM STYROL UND FORMKÖRPER

COMPOSITION DE RÉSINE À BASE DE STYRÈNE RÉGÉNÉRÉ ET OBJET MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2021 JP 2021006871**

(43) Date of publication of application:
**29.11.2023 Bulletin 2023/48**

(73) Proprietor: **Toyo Styrene Co., Ltd.**
**Tokyo 105-0003 (JP)**

(72) Inventors:
• **OKADA Takaaki**
**Ichihara-shi, Chiba 290-0045 (JP)**

• **KONNO Katsunori**
**Ichihara-shi, Chiba 290-0045 (JP)**
• **YOSHINO Takahiko**
**Ichihara-shi, Chiba 290-0045 (JP)**
• **TSUKADA Masashi**
**Ichihara-shi, Chiba 290-0045 (JP)**

(74) Representative: **TBK**
**Bavariaring 4-6**
**80336 München (DE)**

(56) References cited:
**EP-A1- 2 354 168       JP-A- 2001 002 817**
**JP-A- 2001 098 097    JP-A- 2001 254 024**
**JP-A- 2003 231 773    JP-A- 2004 137 388**
**JP-A- 2008 038 026    JP-A- 2015 000 892**
**JP-A- 2017 186 438**

**(Cont. next page)**

(52) Cooperative Patent Classification (CPC): (Cont.)

C-Sets
**C08L 25/06, C08L 51/04;**
**C08L 51/04, C08L 25/06;**
**C08L 51/04, C08L 25/06, C08L 51/04;**
**C08L 51/04, C08L 51/04**

**Description**

Technical Field

The present invention relates to a regenerated-styrene-based resin composition that has a high rate of recycled material content, excellent impact resistance, excellent creep resistance in a thin-walled thickness, as well as a safeness in that the flammability complies with UL94HB, and a molded object including the resin composition.

Background Art

In recent years, with a heightened awareness of environmental issues, a movement to use recycled materials in plastic components of household appliances and office automation machines has been widespread. However, the physical properties of recycled materials are reduced by deterioration, dirt, and foreign substances, and the type and recyclable amount of wasted machines are not constant. Therefore, it has been difficult to stabilize the strength and flammability of plastic components. Examples of a technology concerning the usage of polystyrene-based recycled materials are as follows.

Citation List

Patent Literature

PTL 1: Japanese Patent Application Laid-Open No. 2009-149768
PTL 2: Japanese Patent Application Laid-Open No. 2020-7424

Summary of Invention

Technical Problem

An object of the present invention is to provide a regenerated-styrene-based resin composition that has a high rate of recycled material content, excellent impact resistance, excellent creep resistance in a thin-walled thickness, as well as a safeness in that the flammability complies with UL94HB, and a molded object including the resin composition.

Solution To Problem

The present invention is as follows.

1. A regenerated-styrene-based resin composition including at least a styrene-based recycled material (A) and a styrene-based virgin material (B), wherein a content of the styrene-based recycled material (A) is 40% by mass or more and 90% by mass or less, and a content of the styrene-based virgin material (B) is 10% by mass or more and 60% by mass or less, relative to 100% by mass of the styrene-based recycled material (A) and the styrene-based virgin material (B) in total,
in which a content of a rubber-like polymer is 5.0% by mass or more and 7.0% by mass or less, a content of toluene insoluble matter is 21% by mass or less, and a bending strength, determined in accordance with JIS K7171, is 47 MPa or more.
2. The regenerated-styrene-based resin composition according to the above-described 1, in which the styrene-based recycled material (A) is a post-consumer material.
3. The regenerated-styrene-based resin composition according to the above-described 1 or 2, in which a content of chlorine (Cl) determined by an X-ray fluorescence method is 900 ppm or less, a content of bromine (Br) determined by an X-ray fluorescence method is 900 ppm or less, and a sum of the contents of chlorine (Cl) and bromine (Br) is 1,500 ppm or less.
4. The regenerated-styrene-based resin composition according to any of the above-described 1 to 3, in which a sum of a content of iron (Fe) and a content of copper (Cu), determined by an X-ray fluorescence method, is 150 ppm or less.
5. A molded object including the regenerated-styrene-based resin composition according to any of the above-described 1 to 4.
6. The molded object according to the above-described 5, which is a container for toner cartridges. Advantageous Effects Of Invention

The present invention provides a molded object including a regenerated-styrene-based resin composition that has a high rate of recycled material content, and is excellent in impact resistance, creep resistance, and safeness.
Description Of Embodiments

The present invention is a regenerated-styrene-based resin composition including at least a styrene-based recycled material (A) and a styrene-based virgin material (B).

The styrene-based recycled material (A) in the present invention refers to a recycled material containing a styrene-based resin, which may be either a pre-consumer material or a post-consumer material. A pre-consumer material refers to a material to be recycled that is obtained by collecting discarded materials and defective products generated in the production process of styrene-based resin products or by collecting styrene-based resin products wasted before shipping because they are unsold or out of warranty periods. A post-consumer material refers to a material to be recycled that was shipped to the market and then collected after the use by a consumer had ended. In the present invention, the styrene-based recycled material is preferably a post-consumer material, from the viewpoint that the manufacture of a product should have small environmental burdens as well as that green procurement should be favored and the recycling rate should be improved. Specific examples of the styrene-based resin suitable as a post-consumer material include an expanded polystyrene, an extruded sheet, a container, a packaging material, a case for a recording medium such as a CD or an MD, a bobbin, miscellaneous goods such as a clothes hanger, and plastic components of electrical machines and office automation machines. Among these, a rubber-modified polystyrene recovered from plastic components of household appliances such as a TV set and an air conditioner or plastic components of office automation machines such as a copy machine is particularly preferred, because the impact resistance of the regenerated-styrene-based resin composition can be enhanced.

In the styrene-based recycled material (A) of the present invention, it is preferable to reduce as much as possible metals such as iron (Fe) and copper (Cu), foreign resins such as an olefin-based resin, and a halogen-containing product containing such as chlorine (Cl) or bromine (Br), from the viewpoint of impact resistance, flammability, and environmental burdens. As a method for removing these substances, any known technology can be applied. Examples thereof include screening by hand, screening with magnetic force or eddy currents, screening with a difference in specific gravity, screening with electrization of plastic, screening with near-infrared rays, screening with X-rays, screening with a color sensor, and removal through a screen mesh of an extruder.

The styrene-based virgin material (B) in the present invention refers to an unused styrene-based resin that is not subjected to a production process of a styrene-based resin product. The styrene-based resins described later may be used singly or simultaneously in combination with two or more. Among these, a polystyrene and a rubber-modified polystyrene are particularly preferred.

The styrene-based resin in the present invention is obtained by polymerizing an aromatic vinyl compound, and may be rubber-modified by adding a conjugated diene-based rubber-like polymer as necessary. Examples of known polymerization methods include a bulk polymerization method, a bulk/suspension two-stage polymerization method, and a solution polymerization method. Styrene-based resins produced by any of the methods can be used. Examples of the aromatic vinyl compound-based monomer include known monomers such as styrene, $\alpha$-methylstyrene, o-methylstyrene, m-methylstyrene, and p-methylstyrene, with styrene being preferred. Furthermore, the styrene-based resin can be a copolymer of an acrylonitrile, a (meth)acrylic acid, a (meth)acrylic acid ester, or the like, copolymerizable with the aromatic vinyl compound-based monomer, and a styrene-based monomer. Examples of the styrene-based resin also include a polymer obtained by polymerizing styrene-based monomers in the presence of a crosslinking agent such as divinylbenzene.

Examples of the conjugated diene-based rubber-like polymer used for rubber modification of the styrene-based resin include a polybutadiene, a styrene-butadiene random or block copolymer, a polyisoprene, a polychloroprene, a styreneisoprene random, block, or graft copolymer, an ethylene-propylene rubber, and an ethylene-propylene-diene rubber. In particular, a polybutadiene and a styrene-butadiene random, block or graft copolymer are preferred. They may be partially hydrogenated.

Examples of such styrene-based resins include a polystyrene (GPPS), a rubber-modified polystyrene (HIPS), an ABS resin (an acrylonitrile-butadiene-styrene copolymer), an AS resin (an acrylonitrile-styrene copolymer), an MS resin (a methyl methacrylate-styrene copolymer), an AAS resin (an acrylonitrile-acrylic rubber-styrene copolymer), and an AES resin (an acrylonitrile-ethylene propylene-styrene copolymer).

The styrene-based resin in the present invention may contain an additive other than the styrene-based resin, and examples of the additive include a flame retardant, a dye pigment, an anticolorant, a lubricant, an antioxidant, an anti-aging agent, a light stabilizer, an antistatic agent, a filler, a crystallization nucleating agent, a compatibilizer, and a colorant such as titanium oxide or carbon black.

In the regenerated-styrene-based resin composition of the present invention, concerning the mixing proportion of the styrene-based recycled material (A) and the styrene-based virgin material (B), the content of the styrene-based recycled material (A) is 40% by mass or more and 90% by mass or less relative to 100% by mass of the materials (A) and (B) in total. Therefore, the content of the styrene-based virgin material (B) is 10% by mass or more and 60% by mass or less.

The content of the styrene-based recycled material (A) is more preferably 45% by mass or more and 85% by mass or less, and the content of the styrene-based virgin material (B) is more preferably 15% by mass or more and 55% by mass or less. The content of the styrene-based recycled material (A) is still more preferably 50% by mass or more and 80% by mass or less, and the content of the styrene-based virgin material (B) is still more preferably 20% by mass or more and 50% by mass or less. When the contents of the materials (A) and (B) fall within the respective ranges as above, a regenerated-styrene-based resin composition having a high rate of recycled material content and good flammability in a thin-wall thickness can be obtained.

Since the physical properties of the styrene-based recycled material (A) are not stable, it is difficult to define the physical properties of the styrene-based virgin material (B) to be combined. Therefore, in the present invention, the content of the rubber-like polymer and the content of toluene insoluble matter in a regenerated-styrene-based resin composition, and the bending strength, after mixing the styrene-based recycled material (A) and the styrene-based virgin material (B), are specified, so as to obtain the regenerated-styrene-based resin composition excellent in impact resistance, creep resistance, and flammability.

The content of the rubber-like polymer in the regenerated-styrene-based resin composition is 5.0% by mass or more and 7.0% by mass or less. The content thereof is more preferably 5.0% by mass or more and 6.8% by mass or less, and still more preferably 5.2% by mass or more and 6.5% by mass or less. When the content thereof falls within such a range, a regenerated-styrene-based resin composition having good impact resistance and creep resistance can be obtained.

The toluene insoluble matter in the regenerated-styrene-based resin composition of the present invention includes a rubber-like polymer phase contained in the styrene-based resin, foreign resins hardly soluble or insoluble in toluene, and the like. The content of the toluene insoluble matter of the regenerated-styrene-based resin composition of the present invention is 21% by mass or less. When the content of toluene insoluble matter is 21% by mass or less, a regenerated-styrene-based resin composition having good flammability in a thin-wall thickness can be obtained.

The bending strength of the regenerated styrene-based resin composition determined in accordance with JIS K7171 is 47 MPa or more. When the bending strength thereof is in such a range, a regenerated-styrene-based resin composition having good creep resistance can be obtained.

In the present invention, from the viewpoint of environmental burdens, the content of chlorine (Cl) in the regenerated styrene-based resin composition determined by an X-ray fluorescence method is preferably 900 ppm or less, the content of bromine (Br) is preferably 900 ppm or less, and the sum of the contents of chlorine (Cl) and bromine (Br) is preferably 1,500 ppm or less. When the contents thereof are in such respective ranges, generation of harmful gases is suppressed when burned, and the composition is generally considered as a non-halogen material. Both the contents of chlorine (Cl) and bromine (Br) are more preferably 700 ppm or less, and still more preferably 500 ppm or less.

From the viewpoint of flammability, the sum of the contents of iron (Fe) and copper (Cu) in the regenerated styrene-based resin composition determined by an X-ray fluorescence method is 150 ppm or less.

Other additives can be added to the regenerated-styrene-based resin composition of the present invention within a range not impairing the advantageous effects of the present invention. Examples of the other additives include a stabilizer such as a phenol-based antioxidant, a phosphorus-based antioxidant, a metal deactivator, an acid catcher, an ultraviolet absorber, and a light stabilizer; a lubricant such as a fatty acid-based lubricant, an aliphatic amide-based lubricant, and a metal soap-based lubricant; a filler such as talc, mica, and silica; a reinforcing agent such as a glass fiber; a colorant such as a pigment and a dye; a flame retardant such as a bromine-based flame retardant, a phosphorus-based flame retardant, and a nitrogen-based flame retardant; a flame retardant aid such as antimony trioxide; an anti-drip agent such as polytetrafluoroethylene (PTFE); an antistatic agent such as a nonionic surfactant and a cationic surfactant; and a compatibilizer such as an oxazoline-based compatibilizer, a maleic anhydride-based compatibilizer, and an elastomer-based compatibilizer.

In the present invention, a known mixing technique can be adopted as a mixing method of the styrene-based recycled material and the styrene-based virgin material. For example, a mixture mixed in advance in a mixing device such as a mixer-type mixer, a V-type blender, or a tumbler-type mixer can be further melt-kneaded to obtain a uniform resin composition. There is no particular limitation on the melt-kneading, and a known melt-kneading technique can be applied. Suitable examples of melt-kneading apparatuses include a single-screw extruder, a special single-screw extruder, and a twin-screw extruder. Furthermore, a method of obtaining a resin composition by supplying each component to a melt-kneading apparatus such as an extruder using a respective quantitative feeder can be mentioned.

A known technique can be applied to the molding method of a molded object including the regenerated-styrene-based resin composition of the present invention. Examples of the method include an injection molding method, a press molding method, an extrusion molding method, and a blow molding method.

Specific examples of the molded object including the regenerated styrene-based resin composition of the present invention preferably include, but are not particularly limited to, a container for toner cartridges.

[Examples]

Hereinafter, the present invention will be described in detail with reference to examples, but the present invention is not limited to these examples.

<Measurement of rubber-like polymer content>

A styrene-based resin or a resin composition was dissolved in chloroform. To the solution, a certain amount of an iodine monochloride/carbon tetrachloride solution was added, and the mixture was left in a dark place for 1 hour. After that, a 15mass% potassium iodide solution and 50 ml of pure water were added to the mixture. Excess iodine monochloride was titrated with a 0.1 N sodium thiosulfate/ethanol aqueous solution. The rubber-like polymer content was calculated from the amount of the added iodine monochloride.

<Measurement of reduced viscosity ($\eta$sp/C)>

To 1 g of a styrene-based resin, a mixed solvent containing 17.5 ml of methyl ethyl ketone and 17.5 ml of acetone was added. The mixture was dissolved with shaking at 25°C for 2 hours. After that, insoluble matter was sedimented by centrifugation. The supernatant liquid was taken out by decantation, 250 ml of methanol was added thereto to deposit resin matter. Then, insoluble matter was filtered and dried. The resin matter obtained in this operation was dissolved in toluene to prepare a sample solution having a polymer concentration of 0.4% (mass/volume). The solution flow times (sec) of this sample solution and pure toluene were measured at a constant temperature of 30°C by an Ubbelohde type viscometer. The reduced viscosity was calculated according to the following equation.

$$\eta\mathrm{sp/C} = (\mathrm{t1/t0} - 1)/\mathrm{C}$$

t0: pure toluene flow times (sec)
t1: sample solution flow times (sec)
C: polymer concentration

<(A) Styrene-based recycled material>

A-1: Rubber-modified polystyrene recovered from household appliances
the content of post-consumer material: 100% by mass, the content of rubber-like polymer: 5.7% by mass
A-2: Rubber-modified polystyrene recovered from household appliances
the content of post-consumer material: 100% by mass, the content of rubber-like polymer: 6.2% by mass
A-3: Rubber-modified polystyrene recovered from miscellaneous goods
the content of post-consumer material: 100% by mass, the content of rubber-like polymer: 3.3% by mass

<(B) Styrene-based virgin material>

B-1: Rubber-modified polystyrene
Reduced viscosity ($\eta$sp/C): 0.75 dl/g, the content of rubber-like polymer: 9.2% by mass
B-2: Polystyrene
Reduced viscosity ($\eta$sp/C): 0.70 dl/g
B-3: Rubber-modified polystyrene
Reduced viscosity ($\eta$sp/C): 0.72 dl/g, the content of rubber-like polymer: 5.1% by mass

<Preparation of regenerated-styrene-based resin composition>

The styrene-based recycled material (A) and the styrene-based virgin material (B), as raw materials, were put in a mixer in formulation amounts shown in Table 1 and were preliminarily blended. The blended product was supplied to a twin screw extruder ("TEM26SS: 14 barrel" manufactured by Toshiba Corporation) via a quantitative feeder and then melt-kneaded and extruded under the extrusion conditions of a cylinder temperature of 220°C, a total supply amount of 30 kg/hr, and a screw rotation speed of 300 rpm. The extruded strand was water-cooled and delivered to a pelletizer to obtain pellets of a resin composition. In Comparative Example 1 and Reference Example, pellets of the raw materials were used without any treatment. The obtained resin compositions were evaluated by the following methods. The results are shown in Table 1.

<Toluene insoluble matter>

The resin composition was added to toluene at a ratio of 2.5% by mass and dissolved with shaking at 25°C for 2 hours. After that, insoluble matter (gel matter) was sedimented by centrifugation (rotation speed: 10,000 rpm or more and 14,000 rpm or less, separation time: 30 minutes), and the supernatant liquid was removed by decantation to obtain gel. Next, this swollen gel was preliminarily dried at 100°C for 2 hours, and further dried by a vacuum dryer at 120°C for 1 hour, cooled to normal temperature by a desiccator, and precisely weighed. The insoluble matter percentage was calculated according to the following equation.

$$\text{Insoluble matter percentage (\%)} = ((b - a)/S) \times 100$$

a: weight of centrifugal sedimentation tube
b: weight of dried gel + centrifugal sedimentation tube
S: weight of sample

<Bending strength>

Pellets of the resin composition were heat-dried at 70°C for 3 hours and thereafter molded into an A-type test piece (dumbbell) described in JIS K7139 at a cylinder temperature of 220°C and a metal-mold temperature of 45°C using an injection molding machine ("J100E-P" manufactured by Japan Steel Works, Ltd.). The center portion of the dumbbell piece was cut out into a test piece. The bending strength of this test piece was measured in accordance with JIS K7171.

<Impact resistance>

The impact resistance was evaluated by a Charpy impact value. Pellets of the resin composition were heat-dried at 70°C for 3 hours and thereafter molded into an A-type test piece (dumbbell) described in JIS K7139 at a cylinder temperature of 220°C and a metal-mold temperature of 45°C using an injection molding machine ("J100E-P" manufactured by Japan Steel Works, Ltd.). The center portion of the dumbbell piece was cut out and notched (type A, r = 0.25 mm) by cutting to obtain a test piece. The impact resistance of this test piece was measured in accordance with JIS K 7111-1.

<Flammability>

Pellets of the resin composition were heat-dried at 70°C for 3 hours and thereafter molded into a flammability test piece with a length of 127 mm, a width of 12.7 mm, and a thickness of 0.8 mm, at a cylinder temperature of 200°C and a metal-mold temperature of 45°C, using an injection molding machine ("J100E-P" manufactured by Japan Steel Works, Ltd.). A flammability test was performed on the basis of the horizontal flammability test method (UL94) of Subject 94 by Underwriters Laboratories of the United States. Test pieces that did not satisfy the criteria for HB in this test method were deemed **"NG".**

<Creep resistance>

Pellets of the resin composition were heat-dried at 70°C for 3 hours and thereafter molded into a molded object with a length of 127 mm, a width of 127 mm, and a thickness of 0.8 mm, at a cylinder temperature of 240°C and a metal-mold temperature of 45°C, using an injection molding machine ("J100E-P" manufactured by Japan Steel Works, Ltd.). The obtained molded object was cut out such that its short side would become parallel to the flow direction, thereby obtaining a test piece with a length of 127 mm, a width of 12.7 mm, and a thickness of 0.8 mm. The obtained test piece was subjected to an annealing treatment at 60°C for 24 hours and thereafter weighted at the center between the supporting points at both ends (distance between supporting points: 30 mm) under an atmosphere of 50°C. An initial deflection amount and a deflection amount after leaving for 1 hour were metered by a micro gauge, and a difference from the initial value was measured. A smaller value indicates excellent creep resistance. A sample that measured 5.0 mm or less was deemed "A", and a sample that measured more than 5.0 mm, "B".

<Contents of chlorine (Cl), bromine (Br), iron (Fe), and copper (Cu)>

A molded object, having a length of 127 mm, a width of 127 mm, and a thickness of 0.8 mm and having been obtained by molding similar to in the above-described test of creep resistance, was analyzed using an X-ray fluorescence analyzer ("EDXL300" manufactured by Rigaku Corporation). The contents were each obtained by determining the quantity of the element. In the table, "N.D." indicates not detectable.

[Table 1]

| | | Example | | | Comparative Example | | | | Reference Example |
|---|---|---|---|---|---|---|---|---|---|
| | | 1 | 2 | 3 | 1 | 2 | 3 | 4 | |
| Styrene-based recycled material | A-1 [parts by mass] | 50 | 80 | - | 100 | 30 | - | 50 | - |
| | A-2 [parts by mass] | - | - | 50 | - | - | - | - | - |
| | A-3 [parts by mass] | - | - | - | - | - | 50 | - | - |
| Styrene-based virgin material | B-1 [parts by mass] | 30 | 15 | 30 | - | 40 | 30 | 50 | - |
| | B-2 [parts by mass] | 20 | 5 | 20 | - | 30 | 20 | - | - |
| | B-3 [parts by mass] | - | - | - | - | - | - | - | 100 |
| Content of Rubber-like polymer [% by mass] | | 5. 5 | 5. 8 | 6.2 | 5. 7 | 5.4 | 4.5 | 7.4 | 5. 1 |
| Toluene insoluble matter [% by mass] | | 18.8 | 20. 1 | 18.8 | 22. 5 | 17.6 | 16. 5 | 23. 7 | 12.8 |
| Bending strength [MPa] | | 50 | 52 | 49 | 57 | 45 | 54 | 44 | 57 |
| Cl content [ppm] | | 78 | 120 | 20 | 150 | 30 | 570 | 85 | N. D. |
| Br content [ppm] | | 27 | 45 | 5 | 140 | N. D. | 161 | 25 | N. D. |
| Fe + Cu content [ppm] | | 90 | 140 | 32 | 170 | 44 | 100 | 95 | N. D. |
| Impact resistance [kJ/m$^2$] | | 8.6 | 8.2 | 9.2 | 7.5 | 8.8 | 7.2 | 10.9 | 8.4 |
| Flammability | | HB | HB | HB | NG | HB | HB | NG | HB |
| Creep resistance | | A | A | A | A | B | A | B | A |

As understood from Table 1, the regenerated styrene based resin composition of the present invention boasts a high rate of recycled material content while having excellent impact resistance, excellent creep resistance even as a thin-walled molded object, and a safeness compliant with UL94HB.

It is noted that the content (actually measured value) of the rubber-like polymer of the regenerated-styrene-based resin composition shown in Table 1 is not the same as a value calculated from the contents (actually measured values) of the styrene-based recycled material and the styrene-based virgin material in some cases. It is considered that this is because styrene-based recycled materials in the lot vary widely.

**Claims**

1. A regenerated-styrene-based resin composition comprising at least a styrene-based recycled material (A) and a styrene-based virgin material (B), wherein: the content of the styrene-based recycled material (A) is 40% by mass or more and 90% by mass or less, and the content of the styrene-based virgin material (B) is 10% by mass or more and 60% by mass or less, relative to 100% by mass of the styrene-based recycled material (A) and the styrene-based virgin material (B) in total; and the content of a rubber-like polymer is 5.0% by mass or more and 7.0% by mass or less, the content of toluene insoluble matter is 21% by mass or less, and the bending strength, determined in accordance with JIS K7171, is 47 MPa or more.

2. The regenerated-styrene-based resin composition according to claim 1, wherein the styrene-based recycled material (A) is a post-consumer material.

3. The regenerated-styrene-based resin composition according to claim 1 or 2, wherein the content of chlorine (Cl) determined by an X-ray fluorescence method is 900 ppm or less, the content of bromine (Br) determined by an X-ray fluorescence method is 900 ppm or less, and the sum of the contents of chlorine (Cl) and bromine (Br) is 1,500 ppm or less.

4. The regenerated-styrene-based resin composition according to any one of claims 1 to 3, wherein the sum of the content of iron (Fe) and the content of copper (Cu), determined by an X-ray fluorescence method, is 150 ppm or less.

5. A molded object comprising the regenerated-styrene-based resin composition according to any one of claims 1 to 4.

6. The molded object according to claim 5, which is a container for toner cartridges.

**Patentansprüche**

1. Regenerierte Styrol-basierte Harzzusammensetzung, die mindestens ein recyceltes Styrol-basiertes Material (A) und ein Styrol-basiertes Neumaterial (B) umfasst, wobei:

   der Gehalt des recycelten Styrol-basierten Materials (A) 40 Massen-% oder mehr und 90 Massen-% oder weniger ist, und der Gehalt des Styrol-basierten Neumaterials (B) 10 Massen-% oder mehr und 60 Massen-% oder weniger ist, bezogen auf 100 Massen-% des recycelten Styrol-basierten Materials (A) und des Styrol-basierten Neumaterials (B) insgesamt; und
   der Gehalt an einem kautschukartigen Polymer 5,0 Massen-% oder mehr und 7,0 Massen-% oder weniger ist, der Gehalt an toluolunlöslichen Stoffen 21 Massen-% oder weniger ist und die Biegefestigkeit, bestimmt gemäß JIS K7171, 47 MPa oder mehr ist.

2. Regenerierte Styrol-basierte Harzzusammensetzung gemäß Anspruch 1, wobei das recycelte Styrol-basierte Material (A) ein "Post-Consumer"-Material ist.

3. Regenerierte Styrol-basierte Harzzusammensetzung gemäß Anspruch 1 oder 2, wobei der Gehalt an Chlor (Cl), bestimmt durch ein Röntgenfluoreszenzverfahren, 900 ppm oder weniger ist, der Gehalt an Brom (Br), bestimmt durch ein Röntgenfluoreszenzverfahren, 900 ppm oder weniger ist und die Summe der Gehalte an Chlor (Cl) und Brom (Br) 1.500 ppm oder weniger ist.

4. Regenerierte Styrol-basierte Harzzusammensetzung gemäß einem der Ansprüche 1 bis 3, wobei die Summe aus dem Gehalt an Eisen (Fe) und dem Gehalt an Kupfer (Cu), bestimmt durch ein Röntgenfluoreszenzverfahren, 150 ppm oder weniger ist.

5. Formkörper, der die regenerierte Styrol-basierte Harzzusammensetzung gemäß einem der Ansprüche 1 bis 4 umfasst.

6. Formkörper gemäß Anspruch 5, der ein Behälter für Tonerkartuschen ist.

**Revendications**

1. Composition de résine à base de styrène régénéré comprenant au moins un matériau recyclé à base de styrène (A) et un matériau vierge à base de styrène (B), dans laquelle :

   la teneur en matériau recyclé à base de styrène (A) est 40 % en masse ou plus et 90 % en masse ou moins, et la teneur en matériau vierge à base de styrène (B) est 10 % en masse ou plus et 60 % en masse ou moins, par rapport à 100 % en masse du matériau recyclé à base de styrène (A) et du matériau vierge à base de styrène (B) au total ; et
   la teneur en polymère de type caoutchouc est 5,0 % en masse ou plus et 7,0 % en masse ou moins, la teneur en matière insoluble dans le toluène est 21 % en masse ou moins, et la résistance à la flexion, déterminée conformément à la norme JIS K7171, est 47 MPa ou plus.

2. Composition de résine à base de styrène régénéré selon la revendication 1, dans laquelle le matériau recyclé à base de styrène (A) est un matériau post-consommateur.

**3.** Composition de résine à base de styrène régénéré selon la revendication 1 ou 2, dans laquelle la teneur en chlore (Cl) déterminée par une méthode de fluorescence X est 900 ppm ou moins, la teneur en brome (Br) déterminée par une méthode de fluorescence X est 900 ppm ou moins, et la somme des teneurs en chlore (Cl) et en brome (Br) est 1 500 ppm ou moins.

**4.** Composition de résine à base de styrène régénéré selon l'une quelconque des revendications 1 à 3, dans laquelle la somme de la teneur en fer (Fe) et de la teneur en cuivre (Cu), déterminée par une méthode de fluorescence X, est 150 ppm ou moins.

**5.** Objet moulé comprenant la composition de résine à base de styrène régénéré selon l'une quelconque des revendications 1 à 4.

**6.** Objet moulé selon la revendication 5, qui est un conteneur pour cartouches de toner.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009149768 A
- JP 2020007424 A